# EUROPEAN PATENT APPLICATION

(11) **EP 2 523 513 A1**
(43) Date of publication of application: **14.11.2012**
(21) Application number: 10841877.3
(22) Date of filing: 08.01.2010
(51) Int. Cl.: H04W 72/00

(54) **MULTI-CARRIER COMMUNICATION METHOD**

(71) Applicant: Alcatel Lucent, 75007 Paris (FR)
(72) Inventor: YANG, Tao, Shanghai 201206 (CN)
(74) Representative: 2SPL Patentanwälte
(86) International application number: PCT/CN2010/070072
(87) International publication number: WO 2011/082533

(57) **Abstract**

In order to provide a technical solution of mapping data to multiple carrier, the invention proposes a method of multi-carrier communication. The transmitter Tx, in the predetermined protocol layer, generates respectively for each LCH, at least one middle block transmitted in at least one carrier, each of the middle block is comprised in each data section of data of each LCH transmitted in each carrier; In the MAC layer, for each carrier, generates a MAC PDU, the MAC PDU comprising each middle block transmitted in the carrier and the identification information of the LCH to which the MAC PDU belongs. The receiver Rx, in the MAC layer, receives each MAC PDU corresponding to each carrier; in the predetermined layer, for each LCH respectively, recombines each middle block of the LCH to obtain the complete data of the LCH, according to the identification information of the LCH to which each middle block belongs. The predetermined layer can be RLC layer or MAC layer.

## Description

### Technical field

The invention relates to wireless communication, especially relate to multi-carrier communication.

### Background technology

At present, the multi-carrier communication technology is studied and applied more and more widely. For example, the carrier aggregation (CA) is adopted as the major technology of LTE-A (advanced long term evolution) standard to increase system performance. According to the current standard, up to five component carriers (CC) can be supported by LTE-A standard with bandwidth of each CC up to 20MHz. It has been agreed in the current standard that one transport block (TB) will be generated for each CC in non-MIMO case which means that up to five TB maybe generated in one transmission time interval (TTI) for LTE-A transmitter; and the receiver such as user equipment may receive up to five TB in one TTI at the same time.

In this situation, in order to maximize the utilization rate of component carriers, the transmitter should be able to map the data to be transmitted of each logical channel (LCH) to the multiple component carriers, and transmit them with different transport blocks But the number of logical channels is variable, and the amount of data to be transmitted is not the same. It's provided in release 8 (R8) of LTE-A that only one TB is generated for one TTI in non-MIMO case. So in current standard there is no solution of the technical issue on how to map the data of each LCH buffered in radio link control (RLC) layer to different CC for communication.

### Summary of the Invention

The invention intends to solve the technical issue on how to schedule each data to the multi-carrier for communication.

According to one aspect of the invention, A method of transmitting data based on multi-carrier is proposed, wherein, the method comprises the following steps: generating respectively for each logical channel, in a predetermined protocol layer, at least one middle block transmitted in at least one carrier, each of the at least one middle block comprises one data section of data of one logical channel transmitted in one carrier; creating respectively for each carrier, in the medium access control layer, a protocol unit of the medium access control layer, the protocol unit comprises each middle block transmitted in said carrier and the identification information of the logical channels to which each middle block belongs respectively.

Accordingly, based on another aspect of the invention, a method of receiving data based on multi-carrier is proposed, wherein, the method comprises the following steps: in medium access control layer, receiving protocol units of medium access control layer respectively corresponding to each carrier, the protocol unit comprises the middle block of at least one logical channel transmitted in the carrier and the identification information of the logical channel to which the middle block belongs, each middle block respectively comprises one data section of the data of one logical channel transmitted in one carrier; in the predetermined protocol layer, for each logical channel respectively, according to the identification information of the logical channel to which each middle block belongs, recombining each middle block of the logical channel to obtain the complete data of the logical channel.

The above two aspects fill the gap of current technology, and solve the technical problem on how to map data to multiple carriers for transmitting.

According to the first preferred aspect of the invention, the predetermined protocol layer is the radio link control layer, the generating step comprise: Obtaining communication resources provided by each carrier respectively, from the medium access control layer; Implementing the following steps with each carrier in order:
According to the communication resources of the carrier and the priority order of each logical channel, allocating the unallocated data to the carrier to transmit which is in the minimum amount of transmitted data to be transmitted in each logical channel; when the communication resources of the carrier are exhausted, using the next carrier to repeat the step; when the communication resources of all carriers are exhausted, finishing the step; and when all of the minimum amount of transmitted data of each logical channel are all allocated, and there are carriers whose communication resources are not exhausted, using these carriers to implement the following substep in order:
   According to the unexhausted communication resources of the carrier and the priority order of each logical channel, allocating the unallocated data to the carrier to transmit which is beyond the minimum amount of transmitted data to be transmitted in each logical channel; when the communication resources of the carrier are exhausted, using the next carrier to repeat the step, until the communication resources of all carriers are exhausted, or all of the amount of data of each logical channel to be transmitted are allocated;
      - For each logical channel, generating at least one data unit of radio link control layer respectively corresponding to at least one component carrier, to which the data of the logical channel is allocated, as the middle block, each data unit comprises the data section of the data of the logical channel allocated to the carrier; and when the data of the logical channel are allocated to multiple component carriers, each data unit comprises the location information of the data section in the complete data of the logical channel.

The creating step, for each carrier respectively, uses the merge of the data unit of at least one logical channel corresponding to the carrier to create the protocol unit. The preferred aspect uses each carrier independently, and can reuse the current allocation rule to allocate the data of each LCH to each carrier. It's not necessary to modify the current rule.

According to the second preferred aspect of the invention, the predetermined protocol layer is the radio link control layer. the generating step further comprises the following steps: Obtaining communication resources provided by each carrier respectively, from the medium access control layer; According to the communication resources provided by each carrier respectively, for each logical channel, based on a certain principle, selecting at least one carrier to transmit the data section of the data transmitting the logical channel, wherein, the certain principle is to minimize the times for which the data of each logical channel is divided to be transmitted on multiple carriers. For each logical channel, generating at least one data unit of radio link control layer respectively corresponding to at least one carrier, transmitting the data section of the logical channel, as the middle block, the data unit comprises the data section of the data of the logical channel allocated to the carrier for transmitting; and when the data of the logical channel are allocated to multiple component carriers, each data unit comprises the location information of the data section in the complete data of the logical channel. The creating step, for each carrier respectively, uses a merge of at least two data units or uses one data unit corresponding to the carrier, to create the protocol unit of the carrier. The preferred aspect reduces the occurrence that the data section of LCH transmits in multiple carriers, so the head overhead generated from RLC, MAC layer is less.

According to the third preferred aspect of the invention, the predetermined protocol layer is the medium access control layer, in the radio link control layer, generating a data unit for each logical channel respectively, the data unit comprising complete data of the logical channel, and providing each generated data unit to the medium access control layer.

For each data unit respectively, the generating step further comprises the following steps: According to the communication resources provided by each carrier respectively, based on a certain principle, selecting one or at least two carriers respectively for transmitting each data section of the data of the logical channel, the certain principle is to minimize the times for which the data of each logical channel is allocated to be transmitted on multiple carriers; When the data of the logical channel is transmitted by at least two carriers, converting the data unit to the middle block, otherwise taking the data unit as the middle block itself;

For each carrier respectively, the creating step uses the merge of at least two middle blocks or one middle block corresponding to the carrier to generate the protocol unit of the carrier.

The preferred aspect only needs that the MAC layer implements adaptive adjustment for the carrier aggregation, using RLC PDU for carrier mapping; while the RLC layer still generates a RLC PDU for each LCH according to the provision of R8, not requiring any change for the RLC layer. And the preferred aspect reduces the occurrence that the data of LCH is divided into multiple sections, thus the overhead of head is less.

In a further preferred embodiment of the third aspect, the converting step is: Dividing the data of the logical channel in the data unit into at least two data sections corresponding to at least the two carriers; Duplicating the head information of the data unit, and merging the head information respectively with the at least the two data section into at least two re-segmentations as the middle block, the head information of each re-segmentation is added with the information indicating the order of the re-segmentation in all re-segmentations. The embodiment uses the re-segmentation mechanism of RLC PDU provided in current standard to realize carrier mapping, not requiring more change to the standard.

In another further preferred embodiment of the third aspect, the converting step is: Dividing the complete data unit to at least two sections respectively corresponding to at least two carriers, as the middle block; In the creating step, the protocol unit comprises: Information indicating if the comprised middle block is section of the data unit; and the location information of the section of the data unit in the belonged data units. In the embodiment, for each middle block, the increased overhead is less than the one of duplicating complete head of RLC PDU in the previous embodiment. And the section information and location information are inserted in the head of MAC PDU, not modifying to RLC PDU directly, which meets the principle of layer violation among protocol layers accepted widely in industry at present.

### Brief description of the drawings

By reading the detailed description of the unlimited embodiment referring to the following diagrams, the above and other features, purpose and merits of the invention will be more obvious:
Fig.1 is the flow diagram of protocol stack of transmitter Tx and Receiver Rx implementing data communication based on multi-carrier, according to the first embodiment of the invention;
Fig.2 is the flow diagram of protocol stack of transmitter Tx and Receiver Rx implementing data communication based on multi-carrier, according to the second embodiment of the invention;
Fig.3 is the flow diagram of protocol stack of transmitter Tx and Receiver Rx implementing data communication based on multi-carrier, according to the third embodiment of the invention;

In the diagrams, the same or similar diagram marks represent the same or similar components.

### Detailed embodiment

The following takes the Carrier Aggregation technology in the LTE-A standard as an example, describing several embodiments based on the inventive concept of the invention. It should be understood that the invention is not limited to the LTE-A standard and the CA technology, and may be applied to any multi-carrier communication technology.

The data of each LCH is buffered in the buffer of radio link control (RLC) layer.

### The first embodiment

The embodiment maps the data of LCH to multiple CC in the RLC layer.

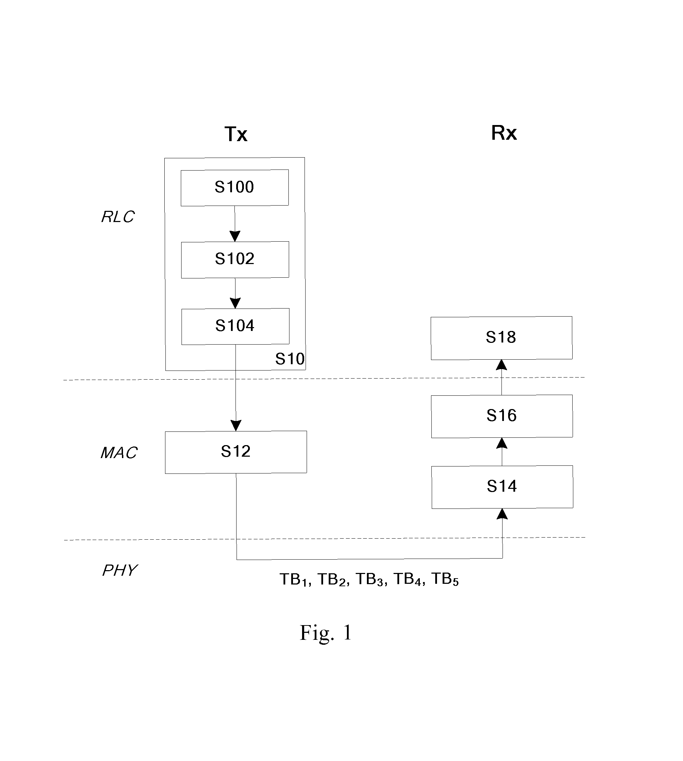

As shown in fig.1, first, step S10, in the RLC layer of transmitter Tx, generates respectively for each LCH, at least one middle block transmitted in at least one carrier, each of the at least one middle block comprises each data section of data of each logical channel transmitted in each carrier;

In detail, in step S100, the RLC layer obtains communication resources provided by each component carrier respectively, from the medium access control (MAC) layer;

Next, in step S102, independently to each carrier in order, according to communication resources provided by the carrier, the RLC layer allocates the unallocated data of LCH to the carrier based on defined principles. In detail, five CC are taken as examples to describe, which is CC1, CC2, CC3, CC4 and CC5.

First, using the component carrier CC₁, according to the priority order of LCH, allocating minimum amount of transmitted data of LCH in the order of priority from high to low, until the communication resources provided by the component carrier CC₁ are exhausted, or all of the minimum amounts of transmitted data of each LCH are allocated. It's the same with the principle provided in R8.

If the communication resources provided by the component carrier CC₁ are exhausted, then it uses the component carrier CC₂. According to the priority order of LCH, minimum amount of transmitted data of the unallocated LCH is allocated, until the communication resources provided by the component carrier CC₂ are exhausted, or all of the minimum amount of transmitted data of each LCH are allocated. It's the same with the principle provided in R8.

When the communication resources provided by the component carrier CC₂ are exhausted, it uses the component carriers CC₃, CC₄ and CC₅ in order to repeat the above step, allocating minimum amount of transmitted data of the unallocated LCH, until the communication resources provided by the component carriers CC₃, CC₄ and CC₅ are exhausted, or all of the minimum amount of data of each LCH to be transmitted are allocated.

When the communication resources of the component carriers CC₃, CC₄ and CC₅ are exhausted, then finishing the allocation process; when all of the minimum amounts of transmitted data of each LCH are allocated, and there are component carriers whose communication resources are not exhausted, using these carriers to implement the following substep in order.

According to the unexhausted communication resources of the carrier and the priority order of each logical channel, allocating the unallocated data to the carrier to transmit which is beyond the minimum amount of transmitted data to be transmitted in each logical channel; when the communication resources of the carrier are exhausted, using the next carrier to repeat the step, until the communication resources of all carriers are exhausted, or all of the amount of data of each logical channel to be transmitted are allocated.

It should be understood, in the above allocation process, the data of each LCH may be allocated for many times, and the data section of each allocation may be allocated with other data section in the same or different CC. If the data of LCH is allocated in the same CC for many times, each data allocated in the CC for many times should be continuous in the complete data of the LCH.

After the allocation process, in the step S104, for each LCH, the RLC layer generates at least one data unit of RLC corresponding to the CC, to which the data of the LCH is allocated, and it's called RLC PDU. Each RLC PDU comprises corresponding head of PDU, and the data section of the data of the LCH allocated to the CC.

When the data of one LCH is once for all allocated to one CC, the RLC layer generates a RLC PDU comprising the data of the LCH according to the provision of the R8 (according to current standard, the PDU head comprises one RLC PDU SN, such as 1);

When at least one data section of the data of one LCH is allocated to one CC for many times, the RLC layer generates a RLC PDU comprising the data section of the LCH according to the provision of the R8, the data allocated each time forms the continuous data section according to the allocated order;

When one LCH data is allocated to multiple CC for many times, the RLC layer generates multiple RLC PDU corresponding to the multiple CC respectively, wherein, each RLC PDU comprises the data section of the CC to which the data of the LCH is allocated, and the location information of the data section in the complete data of the LCH, e.g. the serial number of the data section in the complete data of the LCH (e.g. the values comprised in the PDU head is RLC PDU SN of 1, 2, 3 ... respectively).

Thus, the data of each LCH can be mapped to multiple CC. Each generated RLC PDU is taken as each middle block in the embodiment. The RLC layer provides each RLC PDU to the MAC layer. The RLC layer also informs the MAC layer to which CC each RLC PDU is corresponded.

In the step S12, the MAC layer generates the protocol unit of the MAC layer, called as the MAC PDU, for each CC respectively. The MAC PDU comprises all the RLC PDU transmitted in this CC, which are from the RLC PDU generated from each LCH: when there are multiple RLC PDU in the CC, the MAC PDU should comprise the merge of multiple RLC PDU; when there is only one RLC PDU in the CC, the MAC PDU should comprise the RLC PDU. The MAC PDU comprises in such as the LCH field of the head the identification information of the LCHs to which each RLC PDU belongs respectively. The MAC layer provides each MAC PDU to the physical (PHY) layer.

In the physical layer, the transmitter Tx transmits five transport blocks TB₁, TB₂, TB₃, TB₄ and TB₅ corresponding to the five MAC PDUs to the receiver Rx. The physical layer of the receiver Rx provides each MAC PDU to the MAC layer of the receiver Rx.

In the receiver Rx, in the step S14, the MAC layer receives each MAC PDU corresponding to each CC respectively.

In the step S16, the MAC layer extracts each RLC PDU contained in each MAC PDU, and provides each RLC PDU and the identification information of the LCH to which the RLC PDU belongs, to the RLC layer.

After that, in the step S18, for each LCH respectively, for the LCH data which is divided into multiple data sections and transported in multiple RLC PDU, the RLC layer merges each data section belonging to the same LCH into the complete data of the LCH, according to the identification information of the LCH to which each RLC PDU belongs and the location information of the data section in the complete data of the LCH contained in the head of RLC PDU. For the LCH data which is not divided into multiple data sections, the RLC layer extracts the complete data of the LCH from the one RLC PDU. The RLC layer transmits each complete data of the LCH to the higher layer for subsequent processing.

The merits of the embodiment comprises, for each CC respectively, it allocates the data of each LCH to transmit in the CC by using the allocation process defined in R8, and the data of each LCH can be mapped to each CC without necessary to modify current standard.

### The second embodiment

The embodiment maps the data of the LCH to multiple CC in the RLC layer.

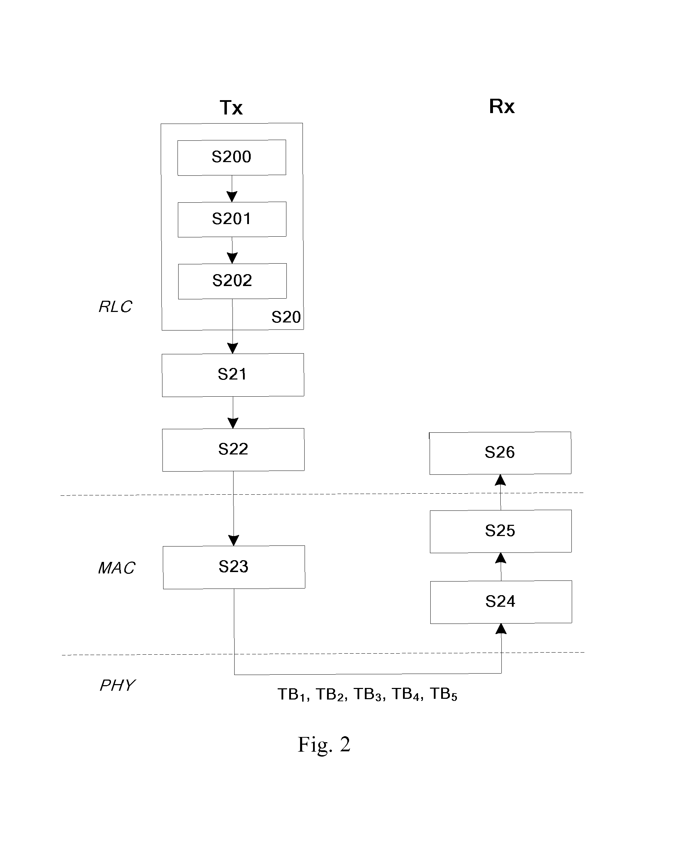

Before mapping the data of each LCH to CC, preferably, the RLC layer determines the amount of data of each LCH transmitting in the TTI respectively. As shown in fig.2, in the step S20, the RLC layer calculates the amount of the data of each LCH mapped to CC.

In a preferred embodiment, the RLC layer calculates the amount of the data of each LCH mapped to CC according to the priority of each LCH.

First, in the step S200, the RLC layer obtains from the MAC layer the total communication resources provided by each CC.

After that, in the step S201, according to the total communication resources and the priority order of each LCH, the RLC layer allocates minimum amount of transmitted data to be transmitted of each LCH, until the communication resources are exhausted, or all of the minimum amount of transmitted data of each LCH are allocated.

If all of the minimum amount of transmitted data of each LCH are allocated, and the communication resources are still left, then the step S202 allocates the data to be transmitted beyond the minimum amount of transmitting data of each LCH, according to the priority order of each LCH, until the communication resources are exhausted, or all of data to be transmitted of each LCH are allocated;

The amount of the data of each LCH allocated in the step S201 and the step S202 (if any) is the amount of the data that can be mapped in CC to transmit in the TTI.

Next, for reducing overhead, taking as a principle that minimizing the times for which the data of each LCH are allocated to multiple CCs to be transmitted, for each LCH, the step S21 selects at least one CC to transmit the data section of the data of the LCH.

After that, in the step S22, for each LCH, the RLC layer generates and transmits at least one data unit of the RLC layer of the data section of the LCH, corresponding to at least one CC one by one, and it's called as RLC PDU.

When the data of one LCH is allocated to one CC as a whole, the RLC PDU contained the data of the LCH is generated according to the R8 provision.

When one LCH data is allocated to multiple CC, it generates multiple RLC PDUs corresponding to the multiple CC respectively, wherein, each RLC PDU comprises the data section of the data of the LCH allocated to the CC, and the location information of the data section in the complete data of the LCH, e.g. the serial number of the data section in the complete data of the LCH (e.g. RLC PDU SN).

Each RLC PDU still comprises other head information of corresponding RLC PDU.

Thus, the data of each LCH can be mapped to multiple CCs. Each generated RLC PDU is taken as each middle block of the embodiment. The RLC layer provides each RLC PDU to the MAC layer. The RLC layer also informs the MAC layer that to which CC each RLC PDU corresponds.

Next, in the step S23, the MAC layer generates the protocol unit of the MAC layer, called as MAC PDU, for each CC respectively. The MAC PDU comprises all the RLC PDUs transmitted in this CC, which are from the RLC PDUs generated for each LCH:
When there are multiple RLC PDUs in the CC, the MAC PDU comprises the merge of the multiple RLC PDUs;
When there is only one RLC PDU in the CC, the MAC PDU comprises the RLC PDU;
The MAC PDU comprises in such as the LCH field of the head the identification information of the LCH to which each RLC PDU belongs respectively. The MAC layer provides each MAC PDU to the physical (PHY) layer.

In the PHY layer, the transmitter Tx transmits five transport blocks TB₁, TB₂, TB₃, TB₄ and TB₅ corresponding to the five MAC PDUs to the receiver Rx. The PHY layer of receiver Rx provides each MAC PDU to the MAC layer of the receiver Rx.

In the MAC layer of the receiver Rx, in the step S24, each MAC PDU corresponding to each CC respectively is received.

In the step S23, the MAC layer extracts each RLC PDU contained in each MAC PDU, and provides each RLC PDU and the identification information of the LCH to which the RLC PDU belongs, to the RLC layer.

After that, in the step S26, for each LCH respectively, for the data of the LCH which is divided into multiple data sections and transported in multiple RLC PDUs, the RLC layer merges each data section belonging to the same LCH into the complete data of the LCH, according to the identification information of the LCH to which each RLC PDU belongs and the location information of the data section in the complete data of the LC contained in the head of RLC PDUH. For the data of LCH which is not divided into multiple data sections, the RLC layer extracts the complete data of the LCH from one RLC PDU. The RLC layer transmits each complete data of the LCH to the higher layer for subsequent processing.

The merits of the embodiment comprises, the RLC layer maps the LCH data to the CC and generates the RLC PDU corresponding to the mapping CC, by taking the principle of minimizing the times for which data of each LCH is allocated to multiple CCs to transmit. Comparing to the first embodiment, it decreases the occurrence that the LCH data is divided into multiple sections, thus the head overhead generated in the RLC layer is less.

### The third embodiment

The embodiment maps the data of LCH to multiple CCs in the MAC layer.

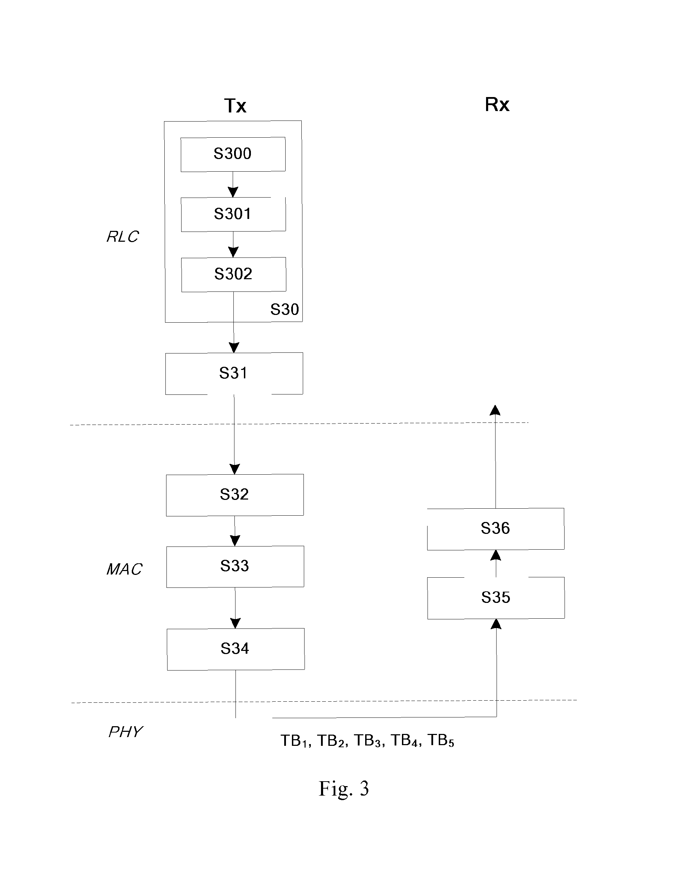

Before the data of each LCH is mapped to CCs, preferably, the RLC layer decides the amount of data each LCH transmitting in the TTI respectively. Similar with the second embodiment, as shown in fig.3, in the step S30, the RLC layer calculates the amount of the data of each LCH mapped to CC.

In a preferred embodiment, the RLC layer calculates the amount of the data of each LCH mapped to CC according to the priority of each LCH.

First, in the step S300, the RLC layer obtains the total communication resources provided by each CC from the medium access control (MAC) layer.

After that, in the step S301, according to the total communication resources and the priority order of each LCH, the RLC layer allocates minimum amount of transmitted data to be transmitted of each LCH, until the communication resources are exhausted, or all of the minimum amounts of transmitted data of each LCH are allocated.

If all of the minimum amount of transmitted data of each LCH are allocated, and the communication resources are still left, then the step S302 allocates the data to be transmitted beyond the minimum amount of transmitting data of each LCH, according to the priority order of each LCH, until the communication resources are exhausted, or all of data to be transmitted beyond the minimum amount of transmitting data of each LCH are allocated;

The amount of the data of each LCH allocated in the step S301 and the step S302 (if any) is amount of the data that can be mapped to CC to transmit in the TTI.

Next, in the step S31, the RLC layer generates one RLC PDU for each LCH respectively according to the provision of R8, which comprises the complete data of the LCH, and provides each RLC PDU to the MAC layer.

After that, in the step S32, according to the communication resources provided by each CC respectively, taking as a principle minimizing the times for which the data of each LCH is allocated to multiple CCs to be transmitted, the MAC layer selects one or at least two CC to transmit each data section of the LCH data respectively for each LCH.

Next, in the step S33, for each LCH, when the data of LCH is transmitted in one single CC, the RLC PDU of the LCH is taken as a middle block itself; or, when the data of LCH is transmitted in at least two CCs, the RLC PDU of the LCH is converted to multiple middle blocks corresponding to at least the two CCs respectively. The embodiment provides two detailed methods to convert RLC PDU to multiple middle blocks.

### Method 1

The MAC layer uses the RLC PDU re-segmentation mechanism provided in R8 to convert.

In detail, the MAC layer divides the complete data of the LCH in the RLC PDU into at least two data sections corresponding to at least the two CC respectively.

And the MAC layer duplicates the head of the RLC PDU, and merges the head with each of the at least the two data sections into at least two re-segmentations respectively, wherein, the MAC layer sets the re-segmentation indicator bit in the head of re-segmentations. At the same time, the MAC layer adds the order information indicating the order of the re-segmentation in all re-segmentations, e.g. adding the offset of the first bit of the re-segmentation with respect to the original RLC PDU, and the length indicator in the head of the MAC PDU generated in the situation may be used to indicate the length of the re-segmentation; or adding the location of the first bit or last bit of the re-segmentation in the original RLC PDU. Each re-segmentation is taken as each middle block to realize carrier mapping.

The merits of the method 1 comprises, by using the RLC PDU re-segmentation mechanism provided in the R8 to realize carrier mapping, it needn't to change the standard a lot.

### Method 2

The MAC layer divides one complete RLC PDU into at least two sections corresponding to at least two CCs respectively as at least two middle blocks to realize carrier mapping.

For each CC, the MAC layer uses the merge of at least two middle blocks or one middle block corresponding to the CC to generate the MAC PDU of the CC. The MAC PDU comprises the identification information of the LCH to which each middle block belongs respectively. When the MAC PDU comprises one of multiple middle blocks divided from one RLC PDU, the MAC PDU should further comprise the following information corresponding to the middle block:
■ Information indicating that the middle block is divided from one RLC PDU. The embodiment creates one MSI (MAC layer Segmentation Indication) field in the head of the MAC PDU to indicate the information. The length of the field is 1 bit;
■ Information indicating the location of the middle block in the corresponding complete RLC PDU. The embodiment creates one MSN (MAC layer Segmentation Number) field in the head of the MAC PDU, which indicates the order number of the middle block in the complete RLC PDU. In the case that the LTE-A standard supports at most five CCs, one RLC PDU may be converted into at most five middle blocks, so the length of the MSN field is three bits which is enough to indicate the order number of the five middle blocks. In order to reduce the head overhead of the MAC PDU, the field only exists when the MSI field is set;
■ Information indicating that the middle block is the last one of the corresponding complete RLC PDU. The embodiment creates one MSE (MAC layer Segmentation End) field in the head of the MAC PDU to indicate the information. The length of the field is one bit. In order to reduce the head overhead of the MAC PDU, the field only exists when the MSI field is set;

The merits of the method 2 comprises, for each middle block, the head overhead of the MAC PDU increases at most five bits, which is less than the increased overhead in the method 1 by duplicating the complete head of RLC PDU. And the section information and location information of the middle block in the complete RLC PDR are all inserted to the head of the MAC PDU, not modifying the RLC PDU directly, which meets the inter-layer-non-violation principle accepted widely in industry.

In the step S34, the MAC layer generates the protocol unit of the MAC layer, called as MAC PDU, for each CC respectively. The MAC PDU comprises all the RLC PDU transmitted in the CC, which are from the RLC PDU generated from each LCH: when there are multiple RLC PDU in the CC, the MAC PDU should comprise the merge of multiple RLC PDU; when there is only one RLC PDU in the CC, the MAC PDU should comprise the RLC PDU; The MAC PDU comprises in such as the LCH field of the head the identification information of the LCH to which each RLC PDU belongs respectively. The MAC layer provides each MAC PDU to the physical (PHY) layer.

In the PHY layer, the transmitter Tx transmits five transport blocks TB₁, TB₂, TB₃, TB₄ and TB₅ corresponding to the five MAC PDUs to the receiver Rx. The PHY layer of receiver Rx provides each MAC PDU to the MAC layer of the receiver Rx.

The MAC layer of the receiver Rx, in the step S35, receives each MAC PDU corresponding to each CC respectively.

In the step S36, the MAC layer of the receiver Rx extracts each middle block contained in each MAC PDU, and recombines each middle block to each RLC PDU according to the identification of the LCH corresponding to each middle blocks.

When the middle block is one single RLC PDU itself, the MAC layer extracts the middle block to get the RLC PDU.

When the middle block is obtained by converting the RLC PDU, the MAC layer extracts each of the middle block and converts the middle blocks to each RLC PDU. In detail, for the middle blocks converted from the above method 1 and method 2, the MAC layer of the receiver Rx implements the following methods of conversion.

### Method 1

When the middle block is the re-segmentation of the RLC PDU, for each LCH, the MAC layer recombines the data section of each re-segmentation to the complete data of the LCH according to the order information of each re-segmentation in all re-segmentations, generates one head, and combines the head and the complete data of the LCH to the RLC PDU.

### Method 2

When the middle block is the section of the RLC PDU, the MAC layer combines each section to each complete RLC PDU, according to the location information of each section in the RLC PDU to which each section belongs, contained in the head of the MAC PDU.

After the MAC layer obtains each RLC PDU by recombining, it transmits each RLC PDU to the RLC layer for consequent processing.

The merits of the embodiment are that, only the MAC layer needs to make adaptive modification to the CA, using RLC PDU for carrier mapping; while the RLC layer generates one RLC PDU for each LCH according to the provision of the R8, not requiring any change.

Though the invention is explained in detail and described in the figures and above descriptions, it should be understood that the explanation and description are illustrative and exemplary, instead of restrictive; the invention is not limited to the above embodiments.

Those skilled in the art may understand and implement other change of the disclosed embodiments by studying the specification, the disclosed content, figures and the claims. In the claims, the word "comprise" doesn't exclude other components and steps, and the word "a" doesn't exclude plural. In the practical application of the invention, one component may implement the functions of multiple technical features quoted in the claims. The reference sign of any figure in claims can't be understood as the limitation to the scope.

## Claims

1. A method of transmitting data based on multi-carrier, wherein the method comprises the following steps:
- generating respectively for each logical channel, in a predetermined protocol layer, at least one middle block transmitted in at least one carrier, each of the at least one middle block comprising a data section of data of a logical channel transmitted in a carrier;
- creating respectively for each carrier, in a medium access control layer, a protocol unit of the medium access control layer, the protocol unit comprising each middle block transmitted in the carrier and identification information of logical channels to which the each middle block belongs respectively.

2. A method as claimed in claim 1, wherein the predetermined protocol layer is a radio link control layer.

3. A method as claimed in claim 2, wherein the generating step comprises:
- obtaining communication resources provided by the each carrier respectively, from the medium access control layer;
- implementing the following steps sequentially with the each carrier:
according to the communication resources of the carrier and a priority order of the each logical channel, allocating unallocated data, which is in a minimum transmit data amount to be transmitted in the each logical channel, to the carrier to transmit; when the communication resources of the carrier are exhausted, using the next carrier to repeat the step; when the communication resources of all carriers are exhausted, ending the step; and when all of the minimum transmit data amount of the each logical channel are allocated, and carriers of which the communication resources are not exhausted still exist, using these carriers sequentially to implement the following substep:
according to the unexhausted communication resources of the carrier and the priority order of the each logical channel, allocating unallocated data, which is in data except the minimum transmit data amount of to be transmitted in the each logical channel, to the carrier to transmit; when the communication resources of the carrier are exhausted, using the next carrier to repeat the step, until the communication resources of all carriers are exhausted, or all data amount in the each logical channel to be transmitted are allocated;
- for the each logical channel, generating at least one data unit of the radio link control layer respectively corresponding to at least one component carrier, to which the data of the logical channel is allocated, as the middle block, each data unit comprising the data section of the data of the logical channel allocated to the carrier; and when the data of the logical channel are allocated to multiple component carriers, each data unit further comprising location information of the data section in complete data of the logical channel;
the creating step, for the each carrier respectively, using a merge of the data unit of the at least one logical channel corresponding to the carrier, to create the protocol unit.

4. A method as claimed in claim 2, wherein the generating step further comprises the following steps:
- obtaining communication resources provided by the each carrier respectively, from the medium access control layer;
- according to the communication resources provided by the each carrier respectively, for the each logical channel, based on a certain principle, selecting at least one carrier to transmit the data section of the data in the logical channel, wherein the certain principle is to minimize times for which the data of the each logical channel is allocated to be transmitted on multiple carriers;
- for the each logical channel, generating at least one data unit of the radio link control layer respectively corresponding to at least one carrier, transmitting the data section of the logical channel, as the middle block, the data unit comprising the data section of the data of the logical channel allocated to the carrier for transmitting; and when the data of the logical channel are allocated to multiple component carriers, each data unit further comprising location information of the data section in complete data of the logical channel;
the creating step, for the each carrier respectively, using a merge of at least two data units or using a data unit corresponding to the carrier, to create the protocol unit of the carrier.

5. A method as claimed in claim 1, wherein the predetermined protocol layer is a medium access control layer, and before the generating step, the method further comprises the following step:
- in a radio link control layer, generating a data unit for the each logical channel respectively, the data unit comprising complete data of the logical channel, and providing the each generated data unit to the medium access control layer.

6. A method as claimed in claim 5, wherein for the each data unit respectively, the generating step further comprises the following steps:
- according to the communication resources provided by the each carrier respectively, based on a certain principle, selecting one or at least two carriers for transmitting the each data section of the data of the logical channel respectively, the certain principle is to minimize times for which the data of the each logical channel is allocated to be transmitted on multiple carriers;
- when the data of the logical channel is transmitted by at least two carriers, converting the data unit to the middle block, otherwise taking the data unit as the middle block itself;
for each carrier respectively, the creating step uses a merge of at least two middle blocks or a middle block corresponding to the carrier, to create the protocol unit of the carrier.

7. A method as claimed in claim 6, wherein the converting step is:
- dividing the data of the logical channel in the data unit into at least two data sections respectively corresponding to the at least two carriers;
- duplicating head information of the data unit, and merging the head information respectively with the at least two data section into at least two re-segmentations as the middle block, the head information of each re-segmentation is added with information indicating the order of the re-segmentation in all re-segmentations.

8. A method as claimed in claim 6, wherein the converting step is:
- dividing the complete data unit to at least two sections respectively corresponding to the at least two carriers, as the middle block;
in the creating step, the protocol unit comprises:
information indicating if the comprised middle block is a section of the data unit; and
the location information of the section of the data unit in the data unit to which it belongs.

9. A method as claimed in claim 1, wherein before the generating step, the method comprises the following steps:
- in a radio link control layer, computing an amount of data of the each logical channel that can be used in the generating step.

10. A method as claimed in claim 9, wherein the computing step comprises:
- obtaining a total communication resources provided by the each carrier, from the medium access control layer;
- based on the total communication resources, according to the priority order of the each logical channel, allocating the minimum transmit data amount to be transmitted of the each logical channel, until the communication resources are exhausted, or all of the minimum transmit data amount of the each logical channel are allocated;
- if all of the transmit data minimum amount of the each logical channel are allocated, and the communication resources are still left, according to the priority order of the each logical channel,
allocating an data amount to be transmitted of the each logical channel except the minimum transmit data amount, until the communication resources are exhausted, or all data amount in the each logical channel to be transmitted are allocated;
the data amount of the each logical channel that has been allocated is the one which can be used in the generating step.

11. A method of receiving data based on multi-carrier, wherein the method comprises the following steps:
- in a medium access control layer, receiving protocol units of the medium access control layer respectively corresponding to each carrier, the protocol unit comprising a middle block of at least one logical channel transmitted in the carrier and identification information of the logical channel to which the middle block belongs, each middle block respectively comprising a data section of data of a logical channel transmitted in a carrier;
- in a predetermined protocol layer, for the each logical channel respectively, according to the identification information of the logical channel to which each middle block belongs, recombining each middle block of the logical channel to obtain complete data of the logical channel.

12. A method as claimed in claim 11, wherein the predetermined protocol layer is a radio link control layer, the middle block is a data unit of the radio link control layer, the data unit comprises a data section of the data of a logical channel that is allocated to the carrier, and when the data section is one of multiple data sections of the data of the logical channel, the data unit further comprises location information of the data section in the complete data of the logical channel;
before the recombining step, in the medium access layer, extracting each data unit contained in the each protocol unit, and providing to the radio link control layer the each data unit and identification information of logical channel to which the data unit belongs to;
the recombining step merges each data section belonging to the same logical channel into the complete data of the logical channel, according to the identification information of the logical channel to which each data unit belongs to and the location information of the data section of the data unit in the complete data of the logical channel.

13. A method as claimed in claims 11, wherein the predetermined protocol layer is a medium access control layer, when the data of the logical channel is transmitted by at least two carriers, the middle block is one of at least two middle blocks obtained by converting the data unit of the radio link control layer of the data of the logical channel, otherwise the middle block is the data unit itself, and the protocol unit comprises a middle block transmitted in the carrier, or a mergence of the at least two middle blocks;
in the medium access layer, the recombining step extracts each middle block comprised in the each protocol unit, and converts the each middle block into each data unit when the each middle block is converted from the each data unit.

14. A method as claimed in claim 13, wherein the each middle block converted from the each data unit is a re-segmentation of the each data unit, the re-segmentation comprising a data section of the complete data of the logical channel and head information of the radio link control layer, the head information comprising the order information of the re-segmentation in all re-segmentations of the data of the logical channel;
In the medium access layer, the converting step is that, respectively for the each logical channel, according to the order information of the each re-segmentation in all re-segmentations, recombining the data sections to the complete data of the logical channel, generating a head of the radio link control layer, and merging the head and the complete data of the logical channel into the data unit.

15. A method as claimed in claim 13, wherein the middle block obtained by converting the data unit is a section of the data unit, the protocol unit comprising:
information indicating if the middle block is the section of the data unit; and
location information of the section of the data unit in the data unit to which it belongs;
in the medium access layer, the converting step is that, according to the location information of the each section in the data unit to which it belongs, merging the sections into the each complete data unit.
